# EUROPÄISCHE PATENTSCHRIFT

(11) **EP 0 971 617 B1**
(45) Veröffentlichungstag und Bekanntmachung des Hinweises auf die Patenterteilung: **24.01.2001**
(21) Anmeldenummer: 98912321.1
(22) Anmeldetag: 18.02.1998
(51) Int. Cl.: A47J 47/20

(54) **VORRICHTUNG ZUR ÖKOLOGISCHEN WASSERNUTZUNG**
DEVICE FOR THE ECOLOGICAL USE OF WATER
DISPOSITIF POUR UNE UTILISATION ECOLOGIQUE DE L'EAU

(30) Priorität: 19.02.1997 DE 29702780 U; 24.07.1997 DE 19731800
(43) Veröffentlichungstag der Anmeldung: 19.01.2000
(73) Patentinhaber: Lellinger, Vera, 66346 Püttlingen (DE); Lellinger, Harald, 66346 Püttlingen (DE)
(72) Erfinder: Lellinger, Vera, 66346 Püttlingen (DE); Lellinger, Harald, 66346 Püttlingen (DE)
(74) Vertreter: Bernhardt, Winfrid, Dr.-Ing.
(86) Internationale Anmeldenummer: EP9800913
(87) Internationale Veröffentlichungsnummer: WO9836672

(56) Entgegenhaltungen:
- EP-A- 0 080 761
- FR-A- 2 326 900
- FR-A- 2 645 003
- GB-A- 2 288 340

## Beschreibung

Die Erfindung betrifft eine Vorrichtung zur ökologischen Wassernutzung, mit einem Siebeinsatz für ein Becken, insbesondere Spülbecken, der einen im Abstand vom Beckenboden gehalterten Siebteil und eine Siebteilhalterung mit sich unter dem Siebteil von einem äußeren Trägerrahmen erstreckenden Stützstreben aufweist.

Aus der GB 2 288 340 A ist ein in Spülbecken einsetzbarer Siebeinsatz gemäß dem Oberbegriff des Anspruchs 1 bekannt, der ein Siebteil aus Edelstahl aufweist, das in einem Rahmen gehaltert ist. An dem Rahmen sind zwei Fußteile bildende Stützstreben angebracht, durch die der Rahmen mit dem Siebteil im Abstand vom Beckenboden gehalten wird. Zur unmittelbaren Abstützung des Siebteils ist nur eine sich zwischen Längsseitenschenkeln des Trägerrahmens erstreckende Stützstrebe vorgesehen. Durch den Siebteil werden Schmutzreste zurückbehalten, die nicht in das Abfluß- und Kanalsystem gelangen, wobei durch den großen Durchlaßquerschnitt des im Abstand vom Beckenboden angeordneten Siebes auch bei starker Schmutzbefrachtung des Spülwassers ein ungehinderter Wasserablauf aus dem Spülbecken nach Öffnung eines Beckenauslasses gewährleistet ist.

Der vorliegenden Erfindung liegt die Aufgabe zugrunde, eine neue verbesserte Vorrichtung zur ökologischen Wassernutzung zu schaffen, durch die sich die Schmutzbefrachtung der Hausabfluß- und Kanalsysteme noch weiter verringern läßt.

Die diese Aufgabe lösende Vorrichtung nach der Erfindung ist dadurch gekennzeichnet, daß sich die Stützstreben von dem äußeren Trägerrahmen zu einem inneren Trägerrahmen erstrecken.

Vorteilhaft läßt sich ein solcher Siebeinsatz derart ausbilden, daß der Siebteil selbst keine Stützfunktion für in dem Becken abgestellte Lasten, z.B. Schüsseln und Geschirr oder große Mengen an Küchenabfällen, wie Kartoffelschalen o.ä., zu übernehmen braucht und bei großer Durchlässigkeit für Wasser dementsprechend feinmaschig ausgebildet sein, so daß auch sehr feine Schmutzpartikel zurückgehalten werden.

In einer Ausführungsform der Erfindung erstrecken sich die Stützstreben trichterförmig von dem Trägerrahmen.

In weiterer Ausgestaltung der Erfindung kann der Trägerrahmen zur innenseitigen Anlage gegen ein sich nach unten verengendes Becken an eine Beckeninnenkontur angepaßt sein. Alternativ könnte der Trägerrahmen bei korbartiger Ausbildung des Siebeinsatzes auf den Beckenrand auflegbar sein.

In einer weiteren Ausführungsform der Erfindung ist der Siebteil des Siebeinsatzes zweiteilig, vorzugsweise mit einem Siebaußenteil und einem von dem Siebaußenteil umgebenen Siebinnenteil, ausgebildet, wobei der Siebinnenteil, auf dem sich bevorzugt Schmutz ablagert, aus dem Siebeinsatz herausnehmbar ist.

In einer besonders bevorzugten Ausführungsform der Erfindung ist das Spülbecken mit einem vom Abfluß in das Kanalsystem getrennten weiteren, mit einem Auffanggefäß verbindbaren Abfluß versehen. Dieser weitere Abfluß kann in einem an dem Spülbecken anbringbaren Einsatz vorgesehen sein, der neben dem weiteren Auslaß den mit dem Abflußkanal zu verbindenden Auslaß sowie einen Schieber zum Auswählen des einen oder anderen Auslasses enthält.

Durch die Möglichkeit, das durch das Sieb gereinigte Wasser aufzufangen, wird nicht nur eine Befrachtung des Abflußkanals mit Schmutz verhindert, sondern es kann auch vorteilhaft das durch das Sieb gereinigte Wasser einer Weiterverwendung zugeführt werden, z.B. zum Blumengießen oder dergleichen.

In einer vorteilhaften Ausführungsform ist das Auffanggefäß daher als Kanne, insbesondere Gießkanne, ausgebildet. Zur bequemen Reinigung kann das Auffanggefäß mehrteilig zerlegbar ausgebildet sein, wobei es z.B. ein Oberteil und ein Unterteil aufweisen kann. Vorteilhaft ist das Oberteil durchsichtig. so daß sich jederzeit der Flüssigkeitsstand in dem Auffanggefäß kontrollieren läßt.

Zur Sicherheit wird das Auffanggefäß in einer bei Überlaufen des Auffanggefäßes wirksamen Auffangwanne angeordnet.

Die Erfindung dient also zur Reduzierung des Frischwasser-Verbrauches, dem Sammeln von Frischwasser und kaum verschmutztem Wasser zwecks Wiederverwendung sowie der Vermeidung von Schmutzfracht im Abfluß- und Kanalsystem und bietet daher Vorteile sowohl aus ökologischer wie auch wirtschaftlicher Sicht.

Der Erfindung liegt u.a. das Problem zugrunde, vor allem Frischwasser, das unbenutzt oder nur mit kleinsten Schmutzpartikeln versehen ist, nicht in den Abwasserkanal abzuleiten, sondern separat zu sammeln, damit es zur Wiederverwendung zur Verfügung steht. Kaum verschmutztes Wasser, z.B. beim Salatwaschen, wird bisher vornehmlich in den Sommermonaten in Schüsseln aufgefangen und z.B. zum Gießen des Vorgartens benutzt. Man ist bestrebt, das relativ saubere Wasser nicht zu verschwenden und würde auch ganzjährig Frischwasser sammeln, wenn dies nicht so umständlich wäre.

Ein besonderes Problem stellt die Schmutzfracht dar, die immer wieder in den Abfluß gelangt, sich mit der Zeit zersetzt und in den Abflußrohren, dem Siphon und im Kanal als schmieriger Schlamm festsetzt. Es bilden sich unangenehme Gerüche und insgesamt entwickelt sich ein zunehmend unhygienischer Zustand. der vor allem bei Offenlegung der Installationen sichtbar wird. Letztere erfolgt erfahrungsgemäß, wenn der Abfluß verstopft ist, eine neue Küche angeschafft oder umgezogen wird.

Das Abwasserkanalsystem wird mit immer größeren Mengen Schmutzfracht belastet; ein Mangel, den die Kläranlagen mit großem Aufwand wieder beseitigen müssen.

Mit der Erfindung wird erreicht, daß z.B. im Haushalt gezielt Wasser gesammelt werden kann (Leerlauf-Wasser; beim Waschen von Salaten, Gemüsen, Obst u.ä.; Aus- und Abspülen von Geschirr, Tabletts, Händen; Leeren von Wasserkesseln, Wärmflaschen usw.). Dieses gesammelte Wasser kann unbedenklich wieder verwendet werden, z.B. zum Spülen, Putzen, Gießen von Zimmerpflanzen, für Gartenbewässerung, Autowäsche und dergleichen. Die Vorteile gegenüber dem sogenannten Grauwasser aus anderen Abflüssen besteht darin, daß das Wasser nicht mit Laugen u.ä. belastet ist, und daß der Sammler genau die Qualität seines Wassers kennt, da es sich um einen sogenannten "kleinen Kreislauf" handelt.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: einen erfindungsgemäßen Siebeinsatz in einer Draufsicht.
- Fig. 2: den Siebeinsatz von Fig. 1 in einer geschnittenen Seitenansicht,
- Fig. 3: eine in der erfindungsgemäßen Vorrichtung verwendbare Auffangkanne in einer Rückansicht,
- Fig. 4: die Auffangkanne von Fig. 3 in einer Seitenansicht,
- Fig. 5 und 6: Details der Kanne von Fig. 3 bzw. 4,
- Fig. 7 und 8: die Kanne von Fig. 3 bzw. 4 in einer Auffangwanne in verschiedenen Seitenansichten,
- Fig. 9 bis 11: einen in der erfindungsgemäßen Vorrichtung verwendbaren, an einem Spülbecken anbringbaren Einsatz mit zwei Abflüssen.

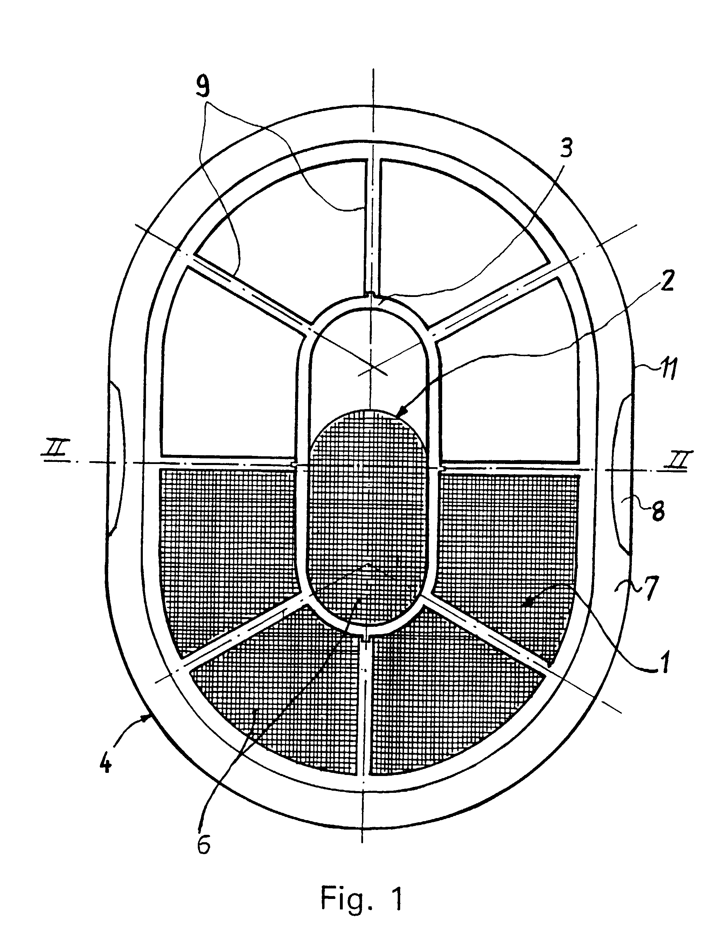

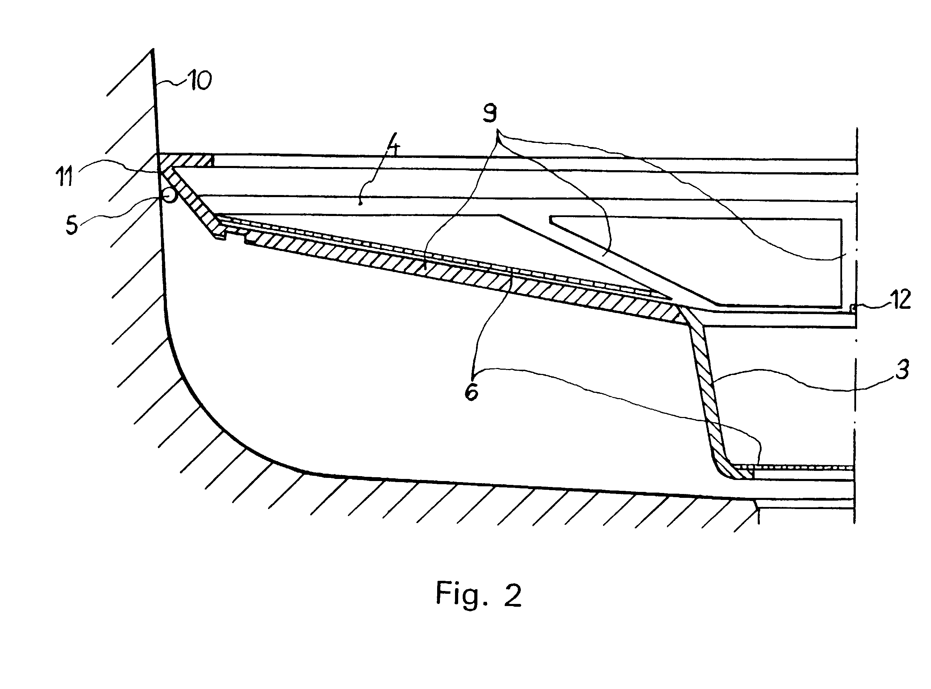

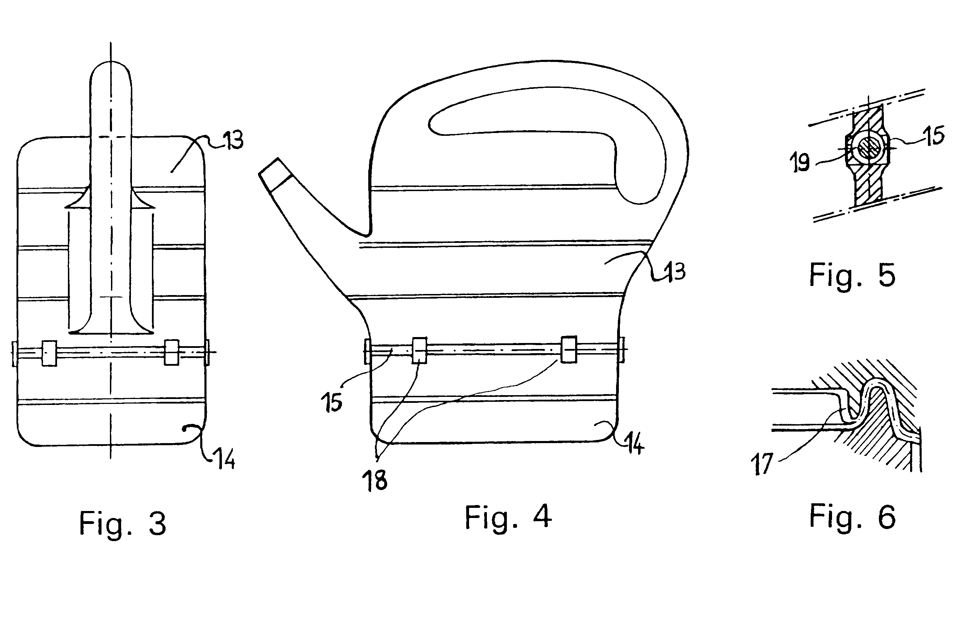

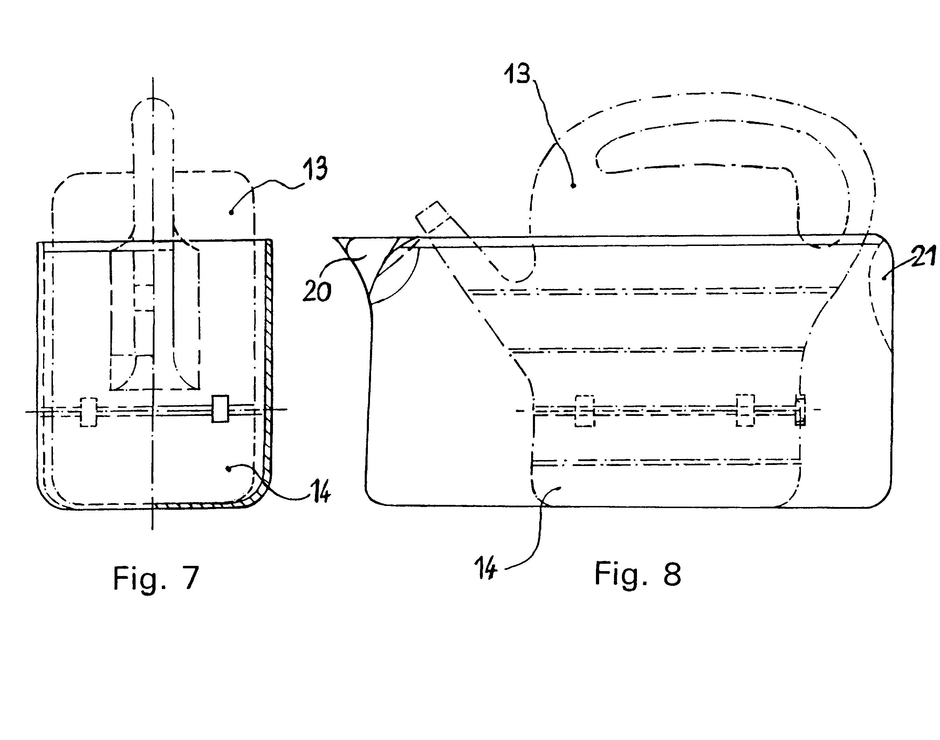

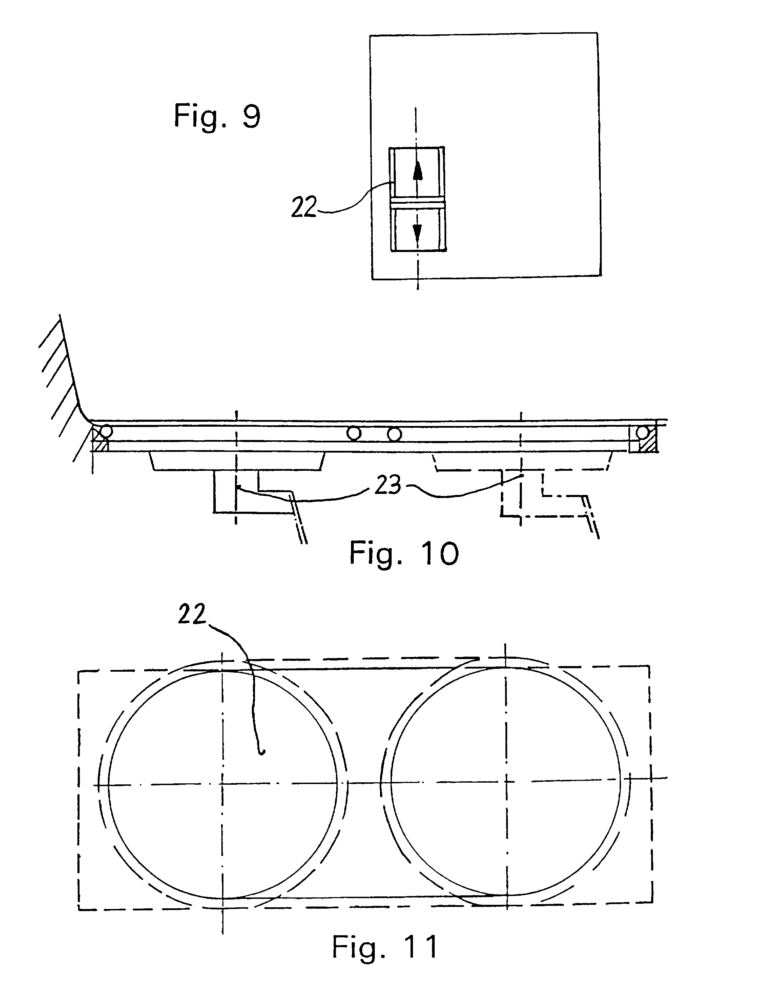

Zum Sammeln des mit dem Siebeinsatz (Fig. 1 und 2) gesiebten Wassers ist ein separater Ablauf in der Spüle vorzusehen, der nicht mit dem Kanalabflußsystem verbunden ist. Durch diesen Abfluß wird das zu sammelnde Wasser mittels eines flexiblen Schlauches in eine Kanne (Fig. 3 bis 8) geführt. Die Kanne steht in einer Auffangwanne (Fig. 7 und 8), die als Überlaufsicherung dient.

Ideolausstattung wäre eine zweite Spülenmulde, die nur für zu sammelndes Wasser benutzt wird. Bei Vorhandensein nur einer Spülenmulde kann das Verfahren ebenfalls mit Hilfe der Vorrichtung (Fig. 9 bis 11), einem Einsatz mit zwei Abflüssen für den Spülenboden, unter Auswahl der Wasserableitung in den Kanal oder das Sammelgefäß durchgeführt werden.

Eine Umrüstung der Spüle ist für jeden Haushalt mit geringem finanziellen Aufwand möglich. Durch den Einsatz der notwendigen Vorrichtungen amortisiert sich dieses System durchschnittlich innerhalb kürzester Zeit; insbesondere dort, wo viel mit Wasser gearbeitet wird.

Das Sieb kann natürlich allein genutzt werden, um keine festen Teile ins Abwassersystem gelangen zu lassen, und z.B. nutzbar in der zweiten Spülenmulde sein, deren Abfluß in den Kanal erfolgt, so daß auch dort nur Flüssigkeit in den Abfluß gelangt; feste Schmutzfracht wird im wesentlichen zurückgehalten.

Übliche Siebe weisen meist grobmaschiges Gewebe auf. das in Beutelform am oberen Rand eingefaßt und mit einem Griff versehen ist. Nachteilig ist. daß das Sieb mit einer Hand gehalten werden muß und nur eine Hand zum Arbeiten zur Verfügung steht. Die im Handel erhältlichen Siebeinsätze für Spülen, z.B. aus Nirosta, sind am Boden mit Grobausflußlöchern versehen, die kleinste Schmutzteile, wie z.B. Sand in den Abfluß gelangen lassen. Die auf den Abfluß aufgelegten Grobsiebe oder die in der Ablaufarmatur integrierten Restefangsiebe bieten zu wenig Auffangfläche und halten auch Kleinstschmutzteile nicht zurück. Nachteilig ist hier, daß diese Siebe selbst fast nach jedem Arbeitsgang entleert und erneut mit Wasser gereinigt werden müssen. Auch die in der Spülenmulde verbliebenen festen Schmutzreste müssen mühsam entnommen und die Mulde selbst wieder gereinigt werden.

Das hier verwendete Sieb bietet den Vorteil, daß grobe bis kleinste Schmutzpartikel aus dem zu sammelnden Wasser abgeschieden werden, und daß trotzdem die Abflußgeschwindigkeit des Wassers nicht beeinträchtigt ist.

Das Sieb ist einfach zu handhaben und zu reinigen. Es wird in die Spülenmulde eingelegt. Der Außenrahmen liegt annähernd formschlüssig auf dem abgerundeten Übergang der Wandungen in dem Bodenbereich der Mulde und deckt diese somit ganzflächig ab. Das Sieb kann vorsorglich ständig in der Mulde verbleiben, da es nicht nach jedem Arbeitsgang gereinigt werden muß. Ein Kleinsieb ist mit einem Handgriff aus einem Großsieb zu entnehmen und problemlos zu entleeren und zu reinigen. Die Reinigung des Großsiebes verläuft ebenfalls einfach. Es läßt sich mittels Griffvorrichtung aus der Mulde herausheben. Auf dem Siebgewebe des Großsiebes verbliebene Schmutzteile sind mit einem Besen, Schaber, Tuch o.ä. abzukehren. Eine Grundreingiung erfolgt im normalen Geschirrspülvorgang.

In den Fig. 1 und 2 ist ein Siebeinsatz für eine rechteckige/ovale Spülenmulde dargestellt.

Der Siebeinsatz besteht aus einem Großsieb 1 und einem Kleinsieb 2. Letzteres ist in die Bodenöffnung des Großsiebes mittels einer Vorrichtung 3 bündig eingesetzt und besteht hauptsächlich aus Kunststoff-Siebgewebe. An einem Außenträgerrahmen 4 des Großsiebes 1 kann eine Ausgleichsdichtung 5 zwecks Bündigkeit angebracht werden. Auf dem trichterförmigen Gerüst des Großsiebes 1 und im Innenboden- oder Gesamtbereich des Kleinsiebes 2 ist ganzflächig Mikro-Siebgewebe 6 aufgebracht. Am oberen Rand des Trägerrahmens 4 des Großsiebes ist ein Schütt/Schutzrand 7 vorgesehen, der an zwei Seiten mit Griffmulden 8 ausgebildet ist. Über die hier gezeigten zwei Griffmulden hinaus könnten noch weitere Griffmulden vorgesehen sein.

Trägerstreben 9 des Großsiebgerüstes verlaufen trichterförmig zu dem Trägerrahmen 4 bzw. Spülenwandungen 10 nach oben, so daß der obere Gerüstrahmenrand 11 etwa ab dem unteren Drittel der Spülenmulde annähernd formschlüssig an den Wandungen 10 der Spüle einliegt. Die handelsüblichen Spülen konvergieren im unteren Teil der Mulde nach unten zum Abfluß. Dies ermöglicht das bündige Aufliegen des oberen Siebrandes, und es verbleibt unter dem Großsieb 1 noch der Platz für das Kleinsieb 2. das als Auffang- und Sammelbehälter dient. An dem oberen Rand des Kleinsiebes 2 sind im Beispiel Halteglieder 12 angebracht, die in ein Gegenstück an einem unteren Mittelrahmenrand des Großsiebes 1 verankernd eingreifen. Damit liegt das Kleinsieb bündig in einer Bodenöffnung des Großsiebes.

Gegenüber dem zweiteiligen Siebeinsatz wäre ein einteiliger preiswerter herstellbar. Es kann vorteilhaft sein, das Sieb als Siebkorb herzustellen, der die Spülenmulde vollflächig abdeckt, was jedoch nicht so kostengünstig wäre. Vorteilhaft ist es auch, wenn das Großsieb mit einem oberen Schütt/Schutzrand versehen wird, der in der horizontalen Auflagenbreite mindestens dem Maß des Außenrahmenrandes entspricht und auf dem Siebgewebe schützend an- oder aufgebracht ist.

Anstelle der Griffmulden 8 könnten Halte/Tragegriffe vorgesehen sein. Anstelle der mittigen Anordnung des Kleinsiebs wäre eine außermittige Anordnung entsprechend der Spülenform und des Schüttwinkels denkbar. Anstelle der ringförmigen Ausgleichsdichtung könnte eine Lippe, ein Band oder dergleichen am oberen Rand des Großsiebes verwendet werden. Ferner ist es denkbar, daß der Boden des Kleinsiebes zum Entleeren nach unten aufgeklappt werden kann. Maße, Flächen und Neigungswinkel des Großsiebes sind entsprechend dem jeweiligen Einsatzzweck auszubilden und z.B. der Form der Spülenmulde anzupassen. Die Abmessungen des Kleinsiebes stehen jeweils in einem zweckmäßigen Verhältnis zu denjenigen des Großsiebes, oder das Volumen des Kleinsiebes ist entsprechend der Größe der aufzunehmenden Schmutzfracht auch im Verhältnis zu der durch das Großsieb aufzunehmenden Schmutzfracht auszuwählen. Die Anordnung des Kleinsiebes im Großsieb richtet sich nach der Spülenform und dem Schüttwinkel. Der Schütt/Schutzrand und die Ausgleichsranddichtung können in verschiedenen Breiten, Höhen und Neigungswinkeln vorgesehen sein.

Zur Herstellung des Siebeinsatzgerüsts eignen sich PP. PE, PA, POM, ABS und dergleichen, wobei der Schütt/Schutzrand Metall, Glas oder Fasern verstärkt sein kann. Für die Siebgewebe eignen sich PA, PP, PET, PVDC, PVDF nach DIN 53853/53854/53855/4197 und dergleichen. Für die Ausgleichsranddichtung können Gummi, Elastomere, Kunststoffe und dergleichen eingesetzt werden. Diese Kunststoffe können vielfältig gefärbt sein, z.B. weiß, schwarz, grau sein, Spektralfarben aufweisen oder transparent sein.

Das Trägergerüst des Siebeinsatzes wird vorzugsweise als Kunststoffspritzgießteil hergestellt. Herstellungsverfahren nach dem Gasinnendruckverfahren, die zur Stabilität und Gewichtsreduzierung beitragen, sind denkbar. Auch könnte vorteilhaft eine galvanische Oberflächenveredelung des Gerüstes des Siebeinsatzes vorgenommen werden. Für die genannten Gerüstteile käme auch eine Herstellung aus nicht rostendem Material, wie Nirosta o.ä., z.B. als Stanzprägeteil, in Betracht.

Das Siebgewebe ist mit dem Trägergerüst vorzugsweise verschweißt, wobei, wenn es sich um Kunststoffteile handelt, vorteilhaft eine Verbindung der Teile durch Ultraschallschweißen oder Kleben erfolgt. Das Siebteil kann auch in das Material des Trägergerüstes eingebettet sein, durch Eingießen/Umspritzen.

Das Kleinsieb kann an dem Großsieb durch Einhängen, Einsetzen, Einschieben, Eindrehen und Klemmen angebracht werden, oder es ist eine Anker- und Klippvorrichtung zur Befestigung am Großsieb vorgesehen.

Das Sieb kann auch direkt auf Sammelgefäße aufgelegt/aufgesetzt werden und demnach als solches benutzt werden, um andere Flüssigkeiten, als Wasser von Groß- bis zu Kleinstteilen zu trennen. z.B. Obstsaftverarbeitung u.ä.. Das Sieb kann als kostengünstigste Version einteilig mit durchgehendem Sieb gefertigt werden; die gesamte konisch verlaufende Fläche dient der Abscheidung von Schmutzfracht.

Es wird nun auf die Fig. 3 bis 6 Bezug genommen, wo eine als Auffangbehälter verwendbare Kanne gezeigt ist.

Die Kanne besteht aus zwei Teilen, einem Oberteil 13 und einem Unter- bzw. Bodenteil 14. Das Oberteil 13 ist mit einer Führungsdichtungsrille 15 und einem Wulst 16 versehen. Es wird auf das Unter- bzw. Bodenteil 14 formschlüssig aufgesetzt/eingefügt/gestülpt. indem dessen oberer Rand in die Führungsrille 15 des Oberteils 13 verbracht wird. Am Unterteil 14 ist eine Außenrinne 17 integriert, die als Halt für Dichtungsfixierungen 18, wie Spangen, Clips, Klammern u.ä. dient. Um eine vollständige Dichtigkeit zu erreichen, können auch Dichtungsvorrichtungen, wie z.B. Rundschnurringe (O-Ring) 19 u.ä. zwischen den beiden Teilen eingebracht werden.

Als weiteres Ausführungsbeispiel käme eine Fertigung mit größerer Eingriffsöffnung an der Breitseite der Außenwandung z.B. in Form eines verschraubbaren "Bullauges" oder einer aufklappbaren Eingriffsöffnung in Betracht. Bei den beschriebenen Kammern ist eine gründliche Innenreinigung vereinfacht oder überhaupt erst möglich. Bei nur verhältnismäßig kleinen Einfüllöffnungen wären die Innenwandungen und der Innenboden nur schwer oder gar nicht, zumindest nicht manuell, erreichbar. Die herkömmliche Reinigung solcher Gefäße könnte nur mit enormem Wasserverbrauch vonstatten gehen. Die gründliche Enffernung von Schmutzfilmen und Rückständen wäre nicht gewährleistet, da die inneren Ausbuchtungen, wie z.B. bei herkömmlichen Gießkannen, schwer zu erreichen sind. Wird die Kanne zur ökologischen Wassernutzung in privaten Haushalten gebraucht, d.h. zum Sammeln von relativ unverschmutztem Wasser zur Wiederverwertung, so ist eine zeitweise gründliche Innenreinigung der Kanne notwendig. Ein übliches Ausspülen kommt den Erfordernissen nicht nach. Bei den beschriebenen Kannen ist die geforderte Reinigung möglich.

Das Oberteil der Kanne wird vornehmlich transparent gefertigt. damit der Wasserstand ersichtlich ist. Die Ausmaße der Kanne sind möglichst den Maßen des Spülenschrankes anzupassen.

Die beschriebenen Kannen sind vorrangig aus Kunststoff gefertigt. Bei zweiteiliger Ausbildung reicht der Kannenoberteil etwa bis zum unteren Drittel der Gesamtkannenhöhe. Die erwähnten, an den Kannen angesehenen Verschlüsse richten sich nach dem Kannenvolumen, wobei Spangen oder Clips oder andere Arretierungen und Fixierungen gewählt werden können.

An den Verbindungsrändern der Kannenteile sind neben Ringen, Rillen und Wülsten auch Gummiringbänder zur Abdichtung verwendbar. Ausschütt- und Griffvorrichtungen sind in ihren Ausmaßen den Spülenunterschränken angepaßt.

Ein "Bullauge" kann als Schraubdeckel oder Klappe mit entsprechenden Dichtungsrillen und/oder Gummis ausgebildet sein. An der Außenwandung der Kanne sind zweckmäßig Scharniere oder ähnliche Vorrichtungen oben und unten zur Befestigung eines schwenkbaren Griffes vorgesehen, wobei dort auch entsprechende Vertiefungen eingearbeitet werden können, um den Griff darin zu versenken.

Zweckmäßig ist an der Kanne eine Halterung für einen Einfüllschlauch angebracht oder dort integriert.

Als Materialien für die Kanne kommen neben Kunststoffen z.B. wenig korrodierende Metalle, wie Nirosta, Aluminium und eventuell Metallkunststoffkombinationen in Betracht. Bei Kunststoffertigung können Verstärkungswülste und Wandungen vorgesehen werden, wobei beliebige Farbgebung möglich ist, wie weiß, schwarz, Spektralfarben und Mischfarben. Die Kannenwände können auch transparent sein.

Als Überlaufsicherung dient eine Auffangwanne, wie sie in den Fig. 7 und 8 gezeigt ist. Diese verhindert eine mögliche Überschwemmung im Spülenschrank, falls das in der Kanne gesammelte Wasser einmal überlaufen sollte. Die Auffangwanne dient vor allem bei der ökologischen Wassernutzung als zusätzliche Sicherheitsvorrichtung. Sie ist ebenfalls vorrangig aus Kunststoff gefertigt und mit einer Ausschüttvorrichtung 20 sowie einer Griffmulde 21 versehen. Die Maße entsprechen Umfang und Volumen des aufzunehmenden Gefäßes. Vorzugsweise entspricht das Material der Wanne demjenigen der Kanne. Es können für Kanne und Wanne aber z.B. unterschiedliche Farben gewählt werden.

Um auch bei Vorhandensein nur einer Spülenmulde Wasser auffangen zu können, wären zwei separate Abflüsse in der Spülenmulde zu installieren. Möglich wäre es, neben dem vorhandenen Abfluß im Spülenboden ein zweites Loch für einen zweiten, separaten Abfluß zu stanzen/bohren. Um den jeweiligen Abfluß (Kanal/Kanne) wählen zu können, müßte mit den vorhandenen Gummistopfenverschlüssen hantiert werden, was relativ umständlich ist. Außerdem ist die gewünschte Dichtigkeit nicht immer gewährleistet. Mit dem Einsatz gemäß Fig. 9 bis 11 ist die Wasserleitung mittels Schieber 22, Deckel oder ähnlicher Vorrichtung wählbar. Im Einsatz selbst sind die zwei notwendigen Abflüsse 23 integriert.

Möglich wäre z.B. auch die Fertigung eines Kunststoff-Installationskastens, versehen mit zwei Abflußvorrichtungen und Schieber, der als Unterbau unter dem Spülenboden angebracht wird, so daß der Einsatz bündig ohne jeden Überstand im Spülenmuldenboden integriert ist. Die Schiebevorrichtung wird mit entsprechenden Dichtungsmaßnahmen, wie Gummi-Lippe u.ä. versehen.

Der Einsatz kann aus Kunststoff, Nirosta oder ähnlichem Material gefertigt sein. Die Neigung des Außenrandes des Einsatzes ist zweckmäßig dem konischen Spülenboden angepaßt. In dem Einsatz können Abflüsse für einen Kanalabfluß sowie ein flexibles Rohr eingearbeitet sein. Der Einsatz ist dermaßen in dem Spülenboden versenkbar, daß durch den Schieber keine Schmutzwinkel verbleiben, wobei an der Schiebereinrichtungen entsprechende Gummidichtungen vorgesehen sein können. Der Schieber weist jeweils die in bezug auf das Becken zweckmäßigste Form auf und ist z.B. quadratisch, oval usw. ausgebildet. Vorzugsweise ist der Schieber von der Spülmuldeninnenseite aus zu betätigen.

Ferner kann ein separater Kunststoffaufsatz vorgesehen sein, der auf dem im Spülboden eingesetzten Einsatz. der mit einer Führungsrinne oder ähnlichem versehen ist, aufgesetzt wird. wobei in diesem Kunststoffaufsatz der Schieber zur Abflußwahl integriert ist. Dieser Aufsatz kann abgenommen werden und ermöglicht somit eine zeitweise gründliche Reinigung des Abflußbereiches.

## Patentansprüche

1. Vorrichtung zur ökologischen Wassernutzung, mit einem Siebeinsotz für ein Becken, insbesondere Spülbecken, der einen im Abstand vom Beckenboden gehalterten Siebteil (6) und eine Siebteilhalterung mit sich unter dem Siebteil (6) von einem äußeren Trägerrahmen (4) erstreckenden Stützstreben (9) aufweist,
dadurch gekennzeichnet,
daß sich die Stützstreben (9) von dem äußeren Trägerrahmen (4) zu einem inneren Trägerrahmen erstrecken.

2. Vorrichtung nach Anspruch 1,
dadurch gekennzeichnet,
daß sich die Stützstreben (9) trichterförmig von dem Trägerrahmen (4) erstrecken.

3. Vorrichtung nach Anspruch 1 oder 2,
dadurch gekennzeichnet,
daß der Trägerrahmen (4) zur innenseitigen Anlage gegen das Becken an eine Beckeninnenkontur (10) angepaßt oder bei korbartiger Ausbildung des Siebeinsatzes auf den Beckenrand auflegbar ist.

4. Vorrichtung nach einem der Ansprüche 1 bis 3,
dadurch gekennzeichnet,
daß der Siebteil des Siebeinsatzes zweiteilig, vorzugsweise mit einem Siebaußenteil (1) und einem von dem Siebaußenteil umgebenen Siebinnenteil (2), ausgebildet ist.

5. Vorrichtung nach einem der Ansprüche 1 bis 4,
dadurch gekennzeichnet,
daß das Spülbecken mit einem vom Abfluß in das Kanalsystem getrennten weiteren, mit einem Auffanggefäß verbindbaren Abfluß versehen ist.

6. Vorrichtung nach Anspruch 5,
dadurch gekennzeichnet,
daß die Abflüsse (23) in einem in dem Beckenboden vorgesehenen Einsatz ausgebildet sind und ein Auswahlschieber (22) zum Auswählen von einem der Abflüsse vorgesehen ist.

7. Vorrichtung nach Anspruch 5 oder 6,
dadurch gekennzeichnet,
daß das Auffanggefäß als Kanne, insbesondere Gießkanne, ausgebildet ist.

8. Vorrichtung nach einem der Ansprüche 5 bis 7,
dadurch gekennzeichnet,
daß das Auffanggefäß zur bequemen Reinigung zerlegbar ausgebildet ist.

9. Vorrichtung nach Anspruch 8,
dadurch gekennzeichnet,
daß das Auffanggefäß ein durchsichtiges Oberteil (13) aufweist.

10. Vorrichtung nach einem der Ansprüche 5 bis 9,
dadurch gekennzeichnet,
daß das Auffanggefäß in einer Auffangwanne angeordnet ist.

## Claims

1. Device for the ecological use of water, having a strainer insert for a basin, in particular sink, which has a strainer part (6), secured at a distance from the basin base, and a strainer-part mount with supporting struts (9) extending beneath the strainer part (6) from an outer carrier frame (4), characterized in that the supporting struts (9) extend from the outer carrier frame (4) to an inner carrier frame.

2. Device according to Claim 1, characterized in that the supporting struts (9) extend in a funnel-like manner from the carrier frame (4).

3. Device according to Claim 1 or 2, characterized in that the carrier frame (4) is adapted to an inner basin contour (10) in order to butt against the inside of said basin or, if the strainer insert is of basket-like design, said carrier frame can be positioned on the basin rim.

4. Device according to one of Claims 1 to 3, characterized in that the strainer part of the strainer insert is of two-part design, preferably with an outer strainer part (1) and an inner strainer part (2) enclosed by the outer strainer part.

5. Device according to one of Claims 1 to 4, characterized in that the sink is provided with a further outflow channel, which is separate from the outflow channel into the drainage system and can be connected to a collecting vessel.

6. Device according to Claim 5, characterized in that the outflow channels (23) are formed in an insert provided in the sink base, and a selection slide (22) is provided for the purpose of selecting one of the two outflow channels.

7. Device according to Claim 5 or 6, characterized in that the collecting vessel is designed as a pouring vessel, in particular a watering can.

8. Device according to one of Claims 5 to 7, characterized in that, for straightforward cleaning, the collecting vessel is designed such that it can be dismantled.

9. Device according to Claim 8, characterized in that the collecting vessel has a transparent top part (13).

10. Device according to one of Claims 5 to 9, characterized in that the collecting vessel is arranged in a collecting container.

## Revendications

1. Dispositif pour une utilisation écologique de l'eau, présentant un insert de tamisage pour un bassin, en particulier un bassin de rinçage, qui présente une pièce de tamisage (6) fixée à une certaine distance du fond du bassin et un dispositif de fixation de la pièce de tamisage, présentant des montants d'appui (9) s'étendant sous la pièce de tamisage (6) à partir d'un cadre de support (4) extérieur, caractérisé en ce que les montants d'appui (9) s'étendent du cadre de support (4) extérieur vers un cadre de support intérieur.

2. Dispositif selon la revendication 1, caractérisé en ce que les montant d'appui (9) s'étendent en forme d'entonnoir à partir du cadre de support (4).

3. Dispositif selon la revendication 1 ou 2, caractérisé en ce que le cadre de support (4) est adapté à un contour interne (10) du bassin pour être placé du côté intérieur contre le bassin ou peut être placé sur le bord du bassin dans le cas d'une exécution en forme de panier de l'insert de tamisage.

4. Dispositif selon l'une quelconque des revendications 1 à 3, caractérisé en ce que la pièce de tamisage de l'insert de tamisage est exécutée en deux parties, de préférence avec une partie externe de tamis (1) et une partie interne de tamis (2) entourée par la partie externe de tamis.

5. Dispositif selon l'une quelconque des revendications 1 à 4, caractérisé en ce que le bassin de rinçage est pourvu d'une autre évacuation, séparée de l'évacuation dans le système d'égouts, pouvant être reliée à un récipient de réception.

6. Dispositif selon la revendication 5, caractérisé en ce que les évacuations (23) sont exécutées dans un insert prévu dans le fond du bassin et en ce qu'on a prévu un curseur de sélection (22) pour le choix d'une des évacuations.

7. Dispositif selon la revendication 5 ou 6, caractérisé en ce que le récipient de réception est exécuté sous forme d'un broc, en particulier d'un arrosoir.

8. Dispositif selon l'une quelconque des revendications 5 à 7, caractérisé en ce que le récipient de réception est exécuté de manière démontable pour un nettoyage aisé.

9. Dispositif selon la revendication 8, caractérisé en ce que le récipient de réception présente une pièce supérieure (13) transparente.

10. Dispositif selon l'une quelconque des revendications 5 à 9, caractérisé en ce que le récipient de réception est disposé dans une cuve de réception.
